# EUROPÄISCHE PATENTSCHRIFT

(11) **EP 2 313 253 B1**
(45) Veröffentlichungstag und Bekanntmachung des Hinweises auf die Patenterteilung: **10.09.2014**
(21) Anmeldenummer: 09776038.3
(22) Anmeldetag: 29.07.2009
(51) Int. Cl.: B29C 65/76, B29B 17/02, H01J 37/30

(54) **VERFAHREN ZUM TRENNEN ZWEIER ÜBER ZUMINDEST EINE KLEBSCHICHT MITEINANDER VERKLEBTER OBJEKTE**
METHOD FOR SEPARATING TWO ARTICLES THAT ARE BONDED TO EACH OTHER VIA AT LEAST ONE ADHESIVE LAYER
PROCÉDÉ POUR SÉPARER DEUX OBJETS COLLÉS ENSEMBLE PAR L'INTERMÉDIAIRE D'AU MOINS UNE COUCHE D'ADHÉSIF

(30) Priorität: 07.08.2008 DE 102008036713
(43) Veröffentlichungstag der Anmeldung: 27.04.2011
(73) Patentinhaber: Technische Universität Carolo-Wilhelmina zu Braunschweig, 38106 Braunschweig (DE)
(72) Erfinder: BÖHM, Stefan, 38179 Schwülper (DE); NOACK, Kai, 31224 Peine (DE)
(74) Vertreter: Stornebel, Kai
(86) Internationale Anmeldenummer: PCT/DE2009/001069
(87) Internationale Veröffentlichungsnummer: WO 2010/015235

(56) Entgegenhaltungen:
- WO-A-2004/014587
- US-A- 3 275 787
- US-A- 3 975 613
- US-A- 4 105 890
- US-A- 6 136 141

## Beschreibung

Die Erfindung betrifft ein Verfahren zum Trennen zweier über zumindest eine Klebschicht miteinander verklebter Objekte.

Das Verkleben von Objekten miteinander bietet eine Vielzahl von Vorteilen. Beispielsweise können unterschiedliche Werkstoffe miteinander verbunden werden, ohne dass durch die Klebung selbst die Eigenschaften der Fügeteile verändert werden. Auf diese Art und Weise ist es möglich, komplexe Produkte aus einem Materialmix herzustellen. Dabei können, neben einer strukturellen Verbindung zweier Bauteile, Klebstoffe auch als Dicht- und Isolationsmaterial oder als Leitklebstoff bezüglich Wärme und/oder elektrischen Stromes eingesetzt werden. Den Vorteilen eines Verklebens unterschiedlicher Werkstoffe miteinander stehen Probleme bei einer gewünschten Trennung der verklebten Objekte voneinander entgegen. Die Notwendigkeit einer Trennung oder eines Entklebens zweier miteinander verklebter Objekte kann sich im Rahmen einer Reparatur im Schadensfall, einer Reparatur bei einer fertigungsbedingten Fehlverklebung oder bei einer Trennung von verklebten Objekten für die Wiederverwendung oder für eine sortenreine Zerlegung als Vorbereitung für ein Recycling ergeben.

Eine Problematik beim Entkleben ergibt sich aus den thermomechanischen Eigenschaften der Klebschichten, die Erweichungs- und Zersetzungsbereiche über relativ große Temperaturintervalle bei unterschiedlichen zeitlichen Einwirkungen haben. Klebschichten auf der Grundlage von duromer vernetzten Klebstoffen sind nicht schmelzbar, in Lösungsmitteln unlöslich und auch nur in einem geringen Umfang anquellbar.

Aufgrund der Vielzahl an möglichen Materialkombinationen sowohl der zu verklebenden Objekte als auch der Klebstoffe gibt es eine Vielzahl an Möglichkeiten, eine Verklebung zu entkleben. Bei einer chemischen Veränderung der Klebschicht werden Basismonomere und/oder Zusätze zu Klebstoffen eingesetzt, in denen unter Bedingungen, die im normalen Einsatz der Klebungen nicht auftreten, physikalischchemische Reaktionen ausgelöst werden. Diese Reaktionen führen zu einer energiearmen Trennung der Klebung. Die dahinter stehenden Mechanismen können beispielsweise die Depolymerisation der Klebschicht zur Entfestigung oder die physikalisch-mechanische Auftrennung der Klebschicht durch Treibmittel sein. Es können aber auch dünne Schichten, z. B. Primerschichten, vorgesehen sein, die zwischen dem Substrat bzw. Objekt und dem Klebstoff aufgebracht werden, in denen die Reaktionen ausgelöst werden. Ein lösbarer Klebstoff auf der Basis von Bindemitteln, bei denen zumindest eine Aufbaukomponente Di- oder Polysulfidbindungen enthält, ist aus der DE 197 33 643 A1 bekannt. Die DE 198 32 629 A1 betrifft ein Klebstoffsystem zur Bildung reversibler Klebverbindungen mit mindestens einer polymeren Klebstoffkomponente auf der Basis von Polyurethan und/oder Polyharzstoffen und/oder Epoxidharzen und zumindest einer Zusatzkomponente. Dabei ist vorgesehen, dass die mindestens eine Zusatzkomponente mindestens eine funktionale Gruppe aufweist, welche durch Energieeintrag aktivierbar ist, so dass eine chemische Reaktion mit der Klebstoffkomponente oder zumindest teilweisem Abbau der Klebstoffkomponente erfolgt.

Weitere lösbare Klebverbindungen sind in der DE 198 33 784 A1, der DE 199 61 694 A1 und der DE 199 04 835 A1 beschrieben.

Eine weitere Möglichkeit zum Entkleben von Klebschichten besteht in der Anwendung von Flüssigkeiten mit lösenden, quellenden oder kapillaraktiven Eigenschaften. Klebstoffe sind auch im Hinblick auf Ihre Lösemittelbeständigkeit entwickelt worden, so dass sich naturgemäß Grenzen bei der Lösungsmittelanwendung für eine Demontage ergeben. In jedem Fall sind längere Einwirkzeiten vorzusehen, was meistens über Tauchbäder realisiert wird, da ein Aufbringen auf die Fügestelle von außen zu einem mehr oder weniger schnellen Verdunsten des Lösungsmittels führt. Die Entklebeverfahren unter Einsatz von Lösungsmitteln beruhen entweder auf Quellvorgängen in der Klebschicht oder dem Eindringen der kapillaraktiven Substanzen in die Grenzschichten. Beispiele für Lösungsmittel sind in der DE 195 26 351 A1, der DE 195 39 394 A1, der DE 196 22 749 A1 oder der DE 42 08 753 A1 beschrieben. Eine weitere Möglichkeit zum Entkleben besteht in dem Einsatz von Wärmeenergie. Diese Möglichkeit ist weitgehend auf thermoplastische Klebschichten beschränkt und wird in der Regel durch gleichzeitige Einwirkung mechanischer Kräfte unterstützt. Eine solche Entklebung empfiehlt sich insbesondere bei Reparaturen von Schraub- und Welle-Nabe-Verbindungen, die mit anaeroben Klebstoffen geklebt sind. Die DE 38 23 952 A1 beschreibt ein Verfahren zum Entkleben von Metall-Nichtmetall Klebungen mittels berührungsloser, induktiver Erwärmung. Die Metallkomponente der beiden Fügepartner wird im Fügebereich kurzzeitig bis zur irreversiblen Aufhebung der adhäsiven und kohäsiven Wirkung des Klebstoffes erwärmt. Die DE 43 28 108 A1 beschreibt ein Verfahren zum Lösen von Bodenbelägen, bei dem der Klebstoff ein Zusatz aus Metall oder Kohlenstoff enthält. Der Bodenbelag wird in ein Mikrowellengerät gebracht, indem der Klebstoff erweicht wird, so dass der Bodenbelag abgezogen werden kann. Die DE 39 15 806 A1 beschreibt ein Verfahren zum Entfernen von Brackets von Zähnen, bei dem die Wärmeenenergie von einer Wärmequelle eines Handgerätes auf das Bracket übertragen wird, wobei durch eine Sicherheitsvorrichtung gewährleistet wird, dass nur eine für den jeweiligen Brackettyp zulässige Wärmemenge übertragen wird.

Weiterhin besteht die Möglichkeit, eine Klebschichterwärmung durch das Hinzufügen von Metall- oder Metalloxyd-Partikeln zum Klebstoff zu bewirken. Aufgrund ihres paramagnetischen Verhaltens lassen sich diese Partikel durch ein äußeres Wechselmagnetfeld zum Schwingen anregen, wodurch die Klebschicht erwärmt wird. Durch die Größe und Zusammensetzung der Teilchen lässt sich die Einkopplungsfrequenz gezielt steuern, so dass es möglich ist, entweder den Klebstoff auszuhärten oder durch eine innere Erwärmung zu plastifizieren. Solche Anwendungen sind in der DE 195 11 657 A1 und der DE 199 54 690 A1 beschrieben.

Durch eine induktive Erwärmung kann eine berührungslose Erwärmung von Metallfügepartnern bewirkt werden, die eine Erweichung des anliegenden Klebstoffbereiches in der Klebstoffschicht mit sich bringt. Nichtmetallische Fügepartner werden dabei nicht erwärmt, so dass beispielsweise durch das Vorsehen eines Einlegeteils im Fügebereich eine Erwärmung der Klebstoffschicht erreicht werden kann. Allein durch die induktive Erwärmung des Metallbauteils oder des Metalleinlegeteils ist eine Entklebung von Klebverbindungen unabhängig von der Gestaltung des Fügebereiches, der Klebstoffart, der Klebspaltedicke und der Klebstoffverformbarkeit möglich. Allerdings müssen hier Einschränkungen hinsichtlich der Festigkeit der Klebung durch das metallische Einlegeteil in Kauf genommen werden.

Die DE 10 2005 05 611 A1 beschreibt ein Verfahren zum rückstandsfreien Lösen von Klebverbindungen, bei dem eine Klebschicht, in die Partikel einformuliert wurden, bei gleichzeitiger Überlagerung von mechanischer Beanspruchung mit Induktion erhitzt wird. Die DE 699 08 417 T2 beschreibt eine entklebbare Klebstoffzusammensetzung, bei der dem Klebstoff anorganische Partikel zugemischt werden, die beim Erwärmen expandieren, wodurch sich die Klebschicht leichter lösen lässt.

Statt einer Erwärmung ist es auch möglich, die Klebschicht durch Abkühlen zu verspröden. Durch Trockeneis oder flüssigen Stickstoff können Klebstellen stark abgekühlt werden, wodurch sich eine Versprödung der Klebschicht mit einem gezielten Aufbau von Eigenspannungen oder Spannungsspitzen durch Schrumpfungen mit der Folge eines Adhäsionsversagens ergibt. Nachteilig an diesem Verfahren ist die nicht einfache Handhabung und Beschaffung der speziellen Kühlmittel sowie eine mechanische Belastung der gesamten Objekte. Die DE 33 36 025 C2 beschreibt ein Verfahren zum Lösen von Klebstoffresten oder von bei tiefen Temperaturen sprödem Material.

Das Beaufschlagen von Klebschichten oder Bauteilen mit mechanischen Schwingungen kann zu einer Verminderung der adhäsiven Bindungen führen. Die Schwingungen können im Ultraschallbereich angesiedelt sein und über Sender, die außerhalb der Klebfuge in dem Objekt angeordnet oder innerhalb eines Piezoelementes innerhalb der Klebfuge eingebracht ist, aufgebracht werden. Die DE 199 11 779 A1 beschreibt ein solches Verfahren und eine entsprechende Vorrichtung.

Klebstoffe mit temporären Klebeigenschaften sind in der DE 41 26 336 A1 sowie der DE 42 30 116 A1 beschrieben.

Eine weitere Möglichkeit zum Entkleben zweier Objekte besteht darin, dass mechanische Trennhilfsmittel in die Klebstofffuge eingelegt werden, beispielsweise Aramidfäden, die in die Klebstoffschicht integriert sind, um an den entsprechenden Stellen die Klebschicht durch ein Herausziehen des Fadens zu trennen.

Die aus dem Stand der Technik bekannten Entklebungsverfahren führen mitunter zu mechanischen Spannungen innerhalb der Objekte oder setzen voraus, dass der Klebstoff eine spezielle Zusammensetzung hat oder dass Komponenten wie Eisenpartikel oder dergleichen enthalten sind, die eine Anwendung beispielsweise von Induktionsverfahren ermöglichen. Vielfach besteht jedoch das Problem, dass fest miteinander verklebte Objekte nicht dazu vorgesehen waren, voneinander getrennt zu werden. Beispielsweise sind bei Gehäusen für elektronische oder elektrische Bauteile häufig Dichtklebungen vorgesehen, die eine dauerhafte und dichte Verklebung der Gehäuseteile bewirken sollen. Eine nachträgliche Manipulation der elektrischen oder elektronischen Bauteile, die innerhalb des Gehäuses eingeschlossen sind, soll auch dadurch verhindert werden, dass eine entsprechend stabile Klebschicht vorhanden ist. Beispielsweise werden Motorsteuergeräte in einem Gehäuse eingeklebt. Tritt nun ein Defekt an den elektronischen Komponenten auf, müssen diese ausgetauscht werden, was dazu führt, dass die Gehäuseteile voneinander getrennt werden müssen. Ein Einfrieren der Objekte und Verspröden der Klebschicht bei gleichzeitiger mechanischer Trennung kann zu mechanischen Spannungen innerhalb der elektronischen Komponenten oder der integrierten Schaltkreise führen, was nachteilig ist. Rein mechanische Trennverfahren, wie Aufsägen oder Fräsen führen zu hohen Vibrationen und mechanischem Stress.

Die WO 2004/014587 A1 betrifft ein System und ein Verfahren zum Verbinden und Trennen von Werkstücken miteinander. Dabei werden strahlungsresponsive Klebstoffe verwendet, die einer elektromagnetischen Strahlung in einer Wellenlänge zwischen 300nm und 1064nm ausgesetzt werden, um auszuhärten. Dabei sind sogenannte Gripperpins vorgesehen, die lichtdurchlässige Flächen aufweisen. An den Stellen mit Gripperpins wird zum Aushärten der Klebeschicht eine elektromagnetische Strahlung in einer Wellenlänge zwischen 300nm und 550nm eingeleitet zum Zerstören der Klebschicht oder zum Schwächen werden elektromagnetische Wellen in einem Wellenlängenbereich zwischen 600nm und 1064nm eingeleitet.

Die US 6,136,141 A beschreibt ein Verfahren zum Herstellen von leichten Halbleiterbauteilen, wobei ein Substrat, auf dem das Halbleiterelement hergestellt wird, zunächst mit einem Trägermaterial verbunden und nach der Herstellung des Halbleiterelements wieder von diesem getrennt wird. Die Verbindung kann mit einem Klebstoff hergestellt werden. Die Trennung von dem Trägermaterial erfolgt, indem ein Laserstrahl direkt auf den Klebstoff, der sich im Verbindungsbereich zwischen dem Substrat und dem Trägermaterial befindet, gerichtet wird. Der Laser bleibt dabei ortsfest und das mit dem Trägermaterial verbundene Substrat wird auf den Laser zu bewegt.

Aufgabe der vorliegenden Erfindung ist es daher, ein Verfahren zum Entkleben zweier Objekte bereitzustellen, das eine saubere Trennung der Objekte voneinander ermöglicht, bevorzugt ohne dass ein mechanischer Stress auf die Objekte oder auf die in den Objekten eingeschlossenen Komponenten ausgeübt wird. Erfindungsgemäß wird diese Aufgabe durch ein Verfahren mit den Merkmalen des Anspruchs 1 gelöst. Vorteilhafte Ausgestaltungen und Weiterbildungen der Erfindung sind in den Unteransprüchen aufgeführt.

Das erfindungsgemäße Verfahren zum Trennen zweier über zumindest eine Klebschicht miteinander verklebter Objekte sieht vor, dass ein Elektronenstrahl auf der Oberfläche zumindest eines der Objekte entlang der Klebschicht geführt wird und die Verweildauer und die Leistung des Elektronenstrahls dergestalt bemessen ist, dass die Grenzschicht zwischen dem Klebstoff und dem Objekt thermisch zerstört wird. Der Elektronenstrahl wird also von außen so über das Objekt oder über das Substrat geführt, von dem der Klebstoff gelöst werden soll, dass er direkt auf der Substratoberfläche oberhalb der Klebschicht oder der Klebfläche positioniert wird, so dass eine gezielte Wärmemenge in das Objekt oder das Substrat eingekoppelt wird. Die Wärme reicht aus, um die Grenzschicht zwischen dem Klebstoff und dem Objekt oder Substrat thermisch zu zerstören. Durch die gezielt eingebrachte thermische Energie wird die Haftung in der Grenzschicht zwischen dem Klebstoff und dem Substrat aufgehoben, so dass sich das Substrat oder das Objekt von dem Klebstoff trennen lässt. Durch die durch den Elektronenstrahl örtlich konzentrierte Wärmeeinbringung sowie die extrem kurze Einwirkzeit durch den Elektronenstrahl ist es möglich, präzise die Klebschicht von dem Objekt oder Substrat zu trennen, so dass das Objekt oder Substrat aufgrund der vergleichsweise langsamen Wärmeleitung nicht oder nur gering thermisch belastet wird. Eine solche langsame Wärmeleitung tritt auch bei Wärmeleitklebstoffen auf, so dass sämtliche Verklebungsarten durch das Verfahren entklebt werden können. Da die Adhäsion durch den Elektronenstrahl komplett zerstört wird, wird bei einem solcherart durchgeführten Entkleben kein mechanischer Stress auf das Objekt ausgeübt. Vielmehr lässt sich die Klebschicht komplett von der mit dem Elektronenstrahl behandelten Substratoberfläche lösen.

Die Leistung- oder die Verweildauer des Elektronenstrahls kann in Abhängigkeit von der Objektdicke und/oder der Art der Klebschicht verändert werden. Werden bei dreidimensionalen Objektstrukturen unterschiedliche Objektdicken von dem Elektronenstrahl zu durchdringen sein, um die Adhäsion zwischen dem Klebstoff und dem Objekt zu zerstören, kann die Variation der Wärmemenge, die in das Objekt im Bereich der Klebschicht eingebracht wird, dadurch erfolgen, dass die Ablenkgeschwindigkeit des Elektronenstrahls verringert wird, also dass der Elektronenstrahl langsam in dem Bereich größerer Objektdicke entlanggefahren wird. Alternativ oder ergänzend ist es vorgesehen, dass die Leistung des Elektronenstrahls, also der Strahlstrom und gegebenenfalls die Beschleunigungsspannung, erhöht werden, um bei einer gleichen Verfahrgeschwindigkeit eine größere Energiemenge im Bereich des Elektronenstrahls in das Objekt einzubringen. Gleiches gilt für die Klebschicht entsprechend, je nach Art des Klebstoffes, der Bindung an das Objekt, der gegenwärtigen Klebstoffbeschaffenheit, die sich beispielsweise durch das Altern ändern kann, oder der Klebstoffdicke können unterschiedliche Wärmemengen erforderlich sein, die über den Elektronenstrahl eingebracht werden müssen.

Die Leistung und/oder die Verweildauer bzw. die Verfahrgeschwindigkeit des Elektronenstrahls wird vorteilhafterweise so bemessen, dass die Temperatur auf der der Elektronenstrahlquelle abgewandten Grenzschicht des Klebstoffes unterhalb der Zerstörungstemperatur der Grenzschicht liegt. Es wird also nur eine Grenzschicht zerstört, so dass das Objekt, das auf der der Elektronenstrahlquelle zugewandten Seite liegt, von der Klebstoffschicht abgenommen werden kann, der Klebstoff sich jedoch nicht von dem zweiten Objekt löst. Dies ist insbesondere bei Klebungen von elektronischen Bauteilen wichtig, die in ein Gehäuse eingeklebt werden. Die eingetragene Energiemenge ist dabei so zu bemessen, dass es zu keiner oder nur einer geringen thermischen Belastung des elektronischen Bauteils oder der Platine kommt.

Vorteilhafterweise wird die Leistung und/oder die Verweildauer des Elektronenstrahls so bemessen, dass die bestrahlten Objekte unbeschädigt bleiben. Ziel des Verfahrens ist es, eine vollständige Abtrennung des Klebstoffes von dem Objekt zu erzielen, möglichst ohne dass das Objekt in irgendeiner Art und Weise beschädigt wird. Dazu wird über den Elektronenstrahl gezielt Wärme in die Grenzschicht eingebracht und zerstört, so dass der Klebstoff sich von dem Objekt zerstörungsfrei ablösen lässt.

Um den Elektronenstrahl entlang der Klebschicht oder der Klebstoffnaht entlang zu führen, kann das Objekt auf einem Verfahrtisch eingespannt und unter dem Elektronenstrahl entlang bewegt werden. Alternativ und ergänzend kann der Elektronenstrahl über eine Ablenkspule abgelenkt werden, um ein schnelles Abfahren der Klebstoffschicht bzw. Klebstoffnaht oder Klebstoffspur zu ermöglichen.

Zur Vermeidung des Auftretens einer Röntgenbremsstrahlung wird der Elektronenstrahl mit einer möglichst geringen Beschleunigungsspannung betrieben, um eine möglichst geringe Eindringtiefe zu gewährleisten. Bevorzugt wird die Beschleunigungsspannung unterhalb von 80 kV gewählt. Die exakte Einstellung der Beschleunigungsspannung ist abhängig von dem Werkstoff der Objekte, dem Klebstoff sowie der Objektdicke. Grundsätzlich ist es möglich, mit dem beschriebenen Verfahren sämtliche Klebstoffe von sämtlichen Objekten oder Substraten zu trennen. Insbesondere ist die Verwendung eines Elektronenstrahles auch bei reflektierenden Objekten möglich, die für eine Erwärmung mittels eines Laserstrahls nicht oder nur schlecht geeignet sind. Ebenfalls ist die Anwendung des Elektronenstrahls auch bei Aluminium oder Aluminiumlegierungen möglich und vorgesehen, die sich weder mit einem Laserstrahl noch mit Induktion in geeigneter Weise gut erwärmen lassen.

Im Gegensatz zu einer Induktionserwärmung ist die Energieeinbringung mit dem Elektronenstrahl wesentlich exakter und in räumlicher Wirkung und Begrenzung wesentlich genauer möglich.

Die bevorzugte Verweildauer des Elektronenstrahls an einem Ort liegt zwischen 0,1 und 100 Millisekunden, um den thermischen Stress auf das Objekt oder die Klebschicht möglichst klein zu halten.

Die Objekte können mittels eines Dichtklebstoffes miteinander verklebt sein und sind bevorzugt als Gehäuseteile von Gehäusen für elektronische Komponenten ausgebildet. Zur Beschleunigung des Entklebens ist es möglich, dass mit zwei oder mehr Elektronenstrahlen gleichzeitig gearbeitet wird, um beide Grenzschichten gleichzeitig durch die Wärmeeinbringung über Elektronenstrahlen zu zerstören. Auch hierbei ist es vorgesehen, dass es zu keiner Zerstörung des Klebstoffes an sich oder der Objekte kommt, um einen möglichst geringen Wärmeeintrag sowohl in die Klebstoffschicht als auch in das Objekt bzw. das eingekapselte Objekt zu bewirken.

Der Elektronenstrahl kann digital über die Objektoberfläche gerastert werden, um eine punktweise Einbringung der Wärme über den Elektronenstrahl in den Bereich der Grenzschicht zu bewirken.

Eine Weiterbildung der Erfindung sieht vor, dass mehrere Elektronenstrahlen gleichzeitig in einer Mehrstrahltechnik oder in einer Mehrbadtechnik über die Objektoberfläche oder über das Werkstück gefahren oder geführt werden. Dadurch ist es möglich, die Bearbeitungszeiten zu verringern.

Der Elektronenstrahl kann in verschiedenen Figuren gependelt werden, um dann im verbreiterten Zustand über die Objektoberfläche im Bereich der zu lösenden Klebschicht gefahren zu werden. Durch das Pendeln wird der fokussierte Elektronenstrahl verbreitert, so dass die Möglichkeit besteht, durch ein einmaliges Abfahren des Elektronenstrahles entlang der Klebschicht die Objekte voneinander trennen zu können. Wird ein fokussierter Elektronenstrahl eingesetzt, kann dieser beispielsweise mäanderförmig relativ zu dem Objekt oder dem Werkstück bewegt werden, so dass eine vollständige Ablösung des Objektes von der Klebschicht erfolgt. Über den fokussierten Elektronenstrahl wird die Grenzschicht nur in einem kleinen Bereich zerstört, so dass der Elektronenstrahl auf zueinander versetzten Spuren entlanggeführt werden muss. Der Elektronenstrahl kann analog oder digital gependelt werden, um ihn zu verbreitern, als Pendelfiguren bieten sich das Dreieckspendeln, das Sinuspendeln oder das Kreispendeln an.

Die Verweildauer und/oder die Leistung des Elektronenstrahls werden bevorzugt so bemessen, dass nur die Grenzschicht zwischen dem Klebstoff und dem Objekt zerstört wird, so dass weder die Klebschicht noch die Objekte zerstört oder beschädigt werden, vielmehr wird ausschließlich die Grenzschicht zwischen dem Klebstoff und dem Objekt thermisch zerstört.

Um eine Temperaturbelastung auf das Objekt oder die Klebstoffschicht weiter zu minimieren, ist in einer Weiterbildung der Erfindung vorgesehen, dass der Elektronenstrahl punktweise auf zueinander beabstandete Bearbeitungsstellen verfahren wird. Das bevorzugt sprungartige Verfahren von weit auseinander liegenden Bearbeitungsstellen führt zu einer punktweisen Ablösung der Klebschicht von dem Objekt durch Zerstörung der Grenzschicht und nur zu einem geringen Wärmeeintrag in das Objekt bzw. Werkstück oder die Klebschicht.

Durch die Zerstörung der Grenzschicht können sowohl duromee als auch thermoplastische Klebstoffe als auch Leitklebstoffe geklebt werden. Die Wärme wird bei dem Verfahren so gezielt und so schnell eingebracht, dass die Grenzschicht zwischen der Klebstoffschicht und dem Objekt zerstört wird, die verklebten Objekte jedoch unbeschädigt bleiben.

Nachfolgend wird die Erfindung anhand der Figuren näher erläutert. Es zeigen:
- Figur 1: - eine Draufsicht auf ein verklebtes Gehäuse;
- Figur 2: - eine Schnittdarstellung gemäß II-II aus Figur 1;
- Figur 3: - eine Detaildarstellung einer Klebzone gemäß Detail III in Figur 2;
- Figur 4: - eine schematische Darstellung einer Strahlpendelung;
- Figur 5: - eine Darstellung einer mäanderartigen Elektronenstrahlbewegung; sowie
- Figur 6: - eine punktweise Bestrahlung eines Objektes.

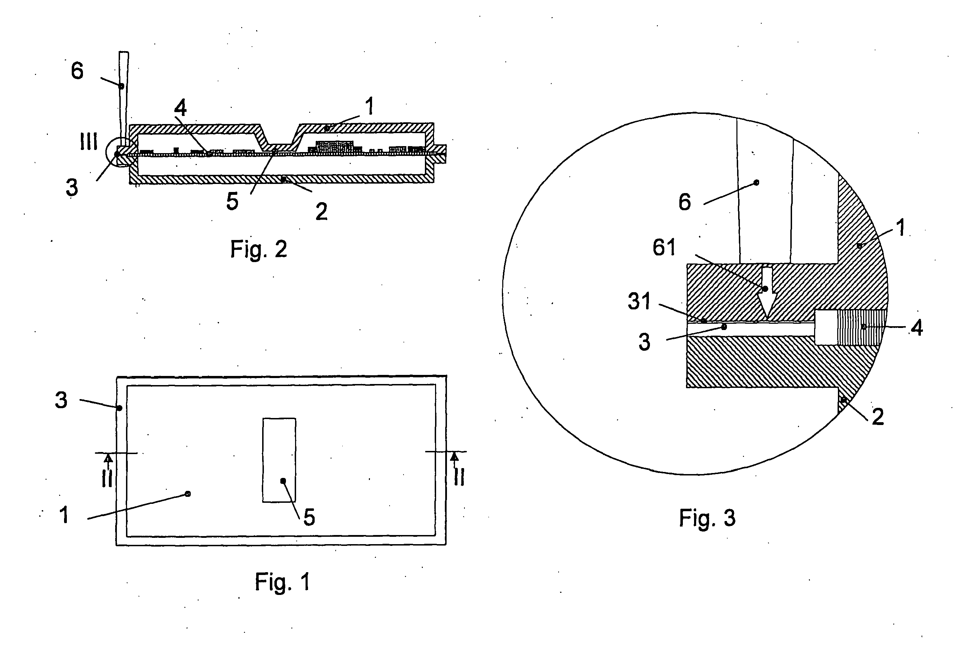

In der Figur 1 ist in Draufsicht ein Gehäuseoberteil 1 dargestellt, das an Klebflächen, die flanschartig an seinem Umfang angeordnet sind, mit einer Klebschicht 3 versehen ist. Die Klebschicht 3 wird von einem Klebdichtstoff gebildet, über den das Gehäuseoberteil 1 als ein erstes Objekt mit einem zweiten Objekt, einem in dieser Figur nicht dargestellten Gehäuseunterteil verbunden ist. Ebenfalls ist ein Bereich innerhalb der Gehäuseoberfläche vorgesehen, der einen Wärmeleitklebstoff 5 aufweist, dessen Aufbau und Funktion nachfolgend erklärt wird.

In der Figur 2 ist eine Schnittdarstellung entlang II-II der Figur 1 dargestellt. Es ist das Gehäuseoberteil 1 in Gestalt eines Aluminiumgussgehäuses gezeigt, das über den Klebdichtstoff 3 mit dem Gehäuseunterteil 2 verklebt ist. Der Klebdichtstoff 3 ist flächig an Klebflächen aufgebracht und verklebt die beiden Gehäuseteile 1, 2 fest miteinander, so dass ein Zugang in das Gehäuse nicht ohne weiteres möglich ist. Innerhalb des Gehäuses ist zwischen dem Gehäuseoberteil 1 und dem Gehäuseunterteil 2 eine Platine 4 angeordnet, die von den Gehäuseteilen 1, 2, umgeben ist. Die Platine 4 ist in dem Rand des Gehäuses im Bereich der Trennfuge eingesetzt und wird innerhalb des Gehäuses ortsfest gesichert. Um eine verbesserte Wärmeableitung aus dem Inneren des Gehäuses zu ermöglichen, ist ein Bereich der Platine 4 über den Wärmeleitklebstoff 5 mit dem Gehäuseoberteil 1 verklebt. Die auf der Platine 4 angeordneten elektronischen Komponenten bewirken im Betrieb eine mitunter erhebliche Erwärmung im Gehäuseinneren, so dass die entstehende Wärme schnellstmöglich aus dem Gehäuseinneren abgeleitet werden muss. Hierzu bietet sich die Verklebung eines Platinenbereiches mit einem Wärmeleitklebstoff 5 an einer Gehäuseseite an.

Da es manchmal notwendig ist, elektronische Komponenten auf der Platine 4 auszutauschen, beispielsweise, weil diese im Verlauf des Gebrauches defekt wurden, ist es notwendig, den Klebdichtstoff 3 und den Wärmeleitklebstoff 5 von dem jeweiligen Objekt, hier dem Gehäuseoberteil 1, dem Gehäuseunterteil 2 oder der Platine 4 zu lösen. Hierzu wird ein Elektronenstrahl 6 von außen auf die Objektoberfläche aufgebracht und entlang der Klebnaht oder der Klebnähte geführt. Im vorliegenden Beispiel müsste der Elektronenstrahl um den Umfang des Gehäuseoberteils 1 herumgeführt werden, wobei aufgrund der Ausrichtung der Klebflächen an dem Gehäuseoberteil 1 und dem Gehäuseunterteil 2 der Elektronenstrahl 6 so geführt wird, dass er durch das Gehäuseoberteil 1 hindurch wirkt. Neben der am Umfang angeordneten Klebschicht aus dem Klebdichtstoff 3 muss dann der Elektronenstrahl 6 noch über die Fläche geführt werden, an der der Wärmeleitklebstoff 5 eine wärmeleitende Verbindung zwischen der Platine 4 und der Innenseite des Gehäuseoberteils 1 herstellt. Auch hier wird der Elektronenstrahl 6 auf der Außenseite des Gehäuseoberteils 1 entlang geführt.

In der Figur 3 ist eine Detaildarstellung des Details III in Figur 2 dargestellt. Es sind die verklebten Randbereiche des Gehäuseoberteils 1 und des Gehäuseunterteils 2 dargestellt. Zwischen dem Gehäuseoberteil 1 und dem Gehäuseunterteil 2 ist die Klebstoffschicht 3 angeordnet, über die die beiden Gehäuseteile 1, 2 miteinander verbunden sind. Ebenfalls zwischen dem Gehäuseoberteil 1 und dem Gehäuseunterteil 2 ist die Platine 4 im Randbereich des Gehäuses angeordnet und sicher innerhalb des Gehäuses gehalten. Die eigentliche Koppelung zwischen dem Klebdichtstoff 3 und dem Gehäuseoberteil 1 findet in einer Grenzschicht 31 statt, eine entsprechende Verbindung zwischen dem Klebdichtstoff 3 und dem Gehäuseunterteil 2 mit einer Grenzschicht ist aus Gründen der Übersichtlichkeit nicht dargestellt, die Ausführungen gelten jedoch entsprechend. Zum Entkleben der Klebung zwischen dem Gehäuseoberteil 1 und dem Gehäuseunterteil 2 wird auf der Oberfläche des Gehäuseoberteils 1 im Bereich der Klebschicht 3 ein Elektronenstrahl 6 entlang geführt. Durch die über den Elektronenstrahl 6 eingekoppelte Wärme in dem Gehäuseoberteil erfolgt eine Zerstörung der Grenzschicht 31 zwischen dem Gehäuseoberteil 1 als Substrat oder Objekt und dem Klebstoff 3 in Gestalt des Klebdichtstoffes. Der Wärmefluss 61 des Elektronenstrahls 6 in dem Gehäuseoberteil 1 ist durch den Pfeil dargestellt. Durch den fokussierten Elektronenstrahl 6 ist es möglich, sehr präzise eine gewünschte Wärmemenge an einen bestimmten Ort innerhalb eines Objektes einzukoppeln. Das Verfahren sieht vor, dass der Elektronenstrahl 6 mit möglichst geringer Leistung betrieben wird, so dass ohne eine Zerstörung des Substrates, im vorliegenden Ausführungsbeispiel des Gehäuseoberteils 1, und des Klebdichtstoffes 3 nur die Grenzschicht 31 zwischen dem Klebdichtstoff 3 und dem Gehäuseoberteil 1 zerstört wird. Um dies zu erreichen, wird der Elektronenstrahl nur über einen sehr kurzen Zeitraum und/oder mit einer geringen Leistung betrieben. Bevorzugt ist zudem die Beschleunigungsspannung so gering, dass während der Ausführung des Verfahrens keine Röntgenbremsstrahlung auftritt.

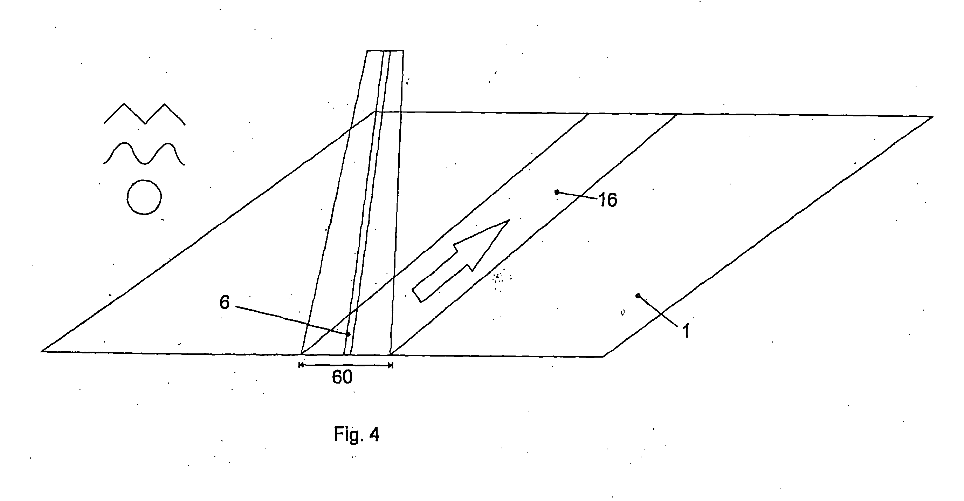

In der Figur 4 ist dargestellt, wie ein fokussierter Elektronenstrahl 6 mit verschiedenen Figuren gependelt werden kann. Die Pendelfiguren sind separat links oben in der Figur 4 dargestellt, als Pendelfiguren kommen beispielsweise eine Dreieckspendelung, eine Sinuspendelung oder eine Kreispendelung in Frage, andere Pendelungen sind möglich. Durch die Pendelung des fokussierten Elektronenstrahls 6 erfolgt eine Verbreiterung des Elektronenstrahls auf eine Strahlpendelbreite 60. Diese ist bevorzugt so groß, wie die abzufahrende Spur bzw. die abzufahrende Fläche 16 auf dem Objekt 1. Der gependelte Elektronenstrahl 6 wird dann mit der Strahlpendelbreite 60 in Pfeilrichtung relativ zu dem Objekt 1 bewegt, wobei entweder der Elektronenstrahl 6 durch eine Ablenkspule im Vakuum abgelenkt oder das Objekt 1 bewegt wird. Ebenfalls ist es möglich, dass sowohl der Elektronenstrahl 6 als auch das Objekt 1 oder Werkstück für sich genommen bewegt wird, um möglichst schnell ein Entkleben der unterhalb der Objektoberfläche liegenden Klebschicht zu erreichen. Die Bewegung des Objektes kann neben einer reinen x-y-Verschiebung auch darin bestehen, dass das Objekt so zu dem Elektronenstrahl 6 ausgerichtet wird, dass dieser stets senkrecht auf der zu bestrahlenden Fläche bzw. der zu bestrahlenden Stelle des Objektes auftrifft, um die Wärme möglichst exakt in die Grenzschicht 31 einbringen zu können. Das Objekt 1 kann daher im Raum gedreht und/oder verschoben werden.

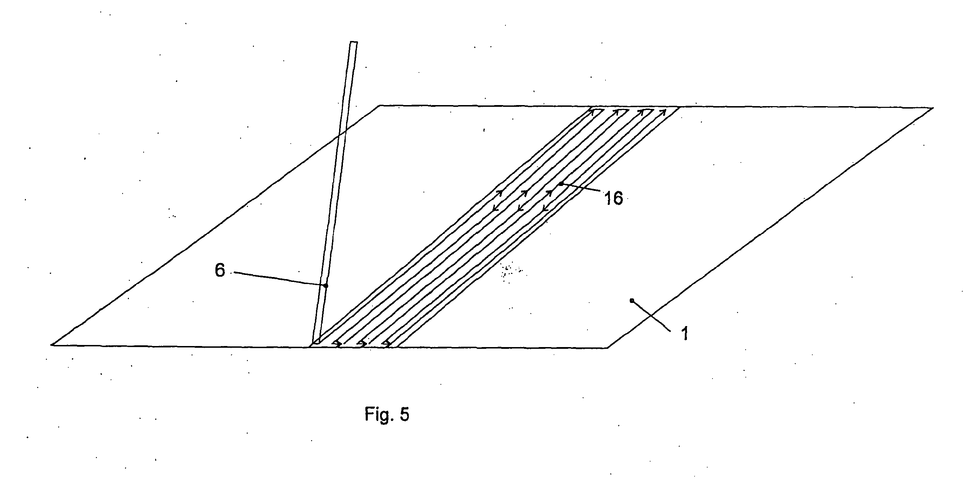

In der Figur 5 ist eine Variante der Strahlführung gezeigt, bei der der fokussierte Elektronenstrahl 6 mäanderförmig auf der abzufahrenden Spur oder abzufahrenden Fläche 16 auf dem Objekt 1 entlang bewegt wird. Auch hier kann entweder der Elektronenstrahl 6 oder das Objekt 1 oder beide gleichzeitig zueinander bewegt werden.

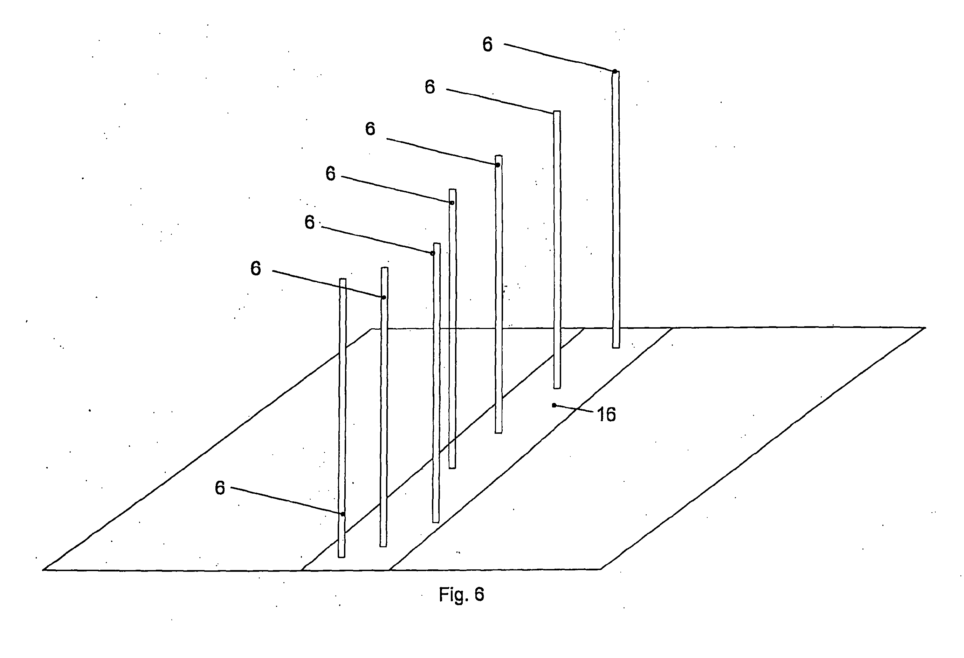

In der Figur 6 ist das Mehrstrahlverfahren oder das Mehrbadverfahren dargestellt, bei dem mehrere Elektronenstrahlen 6, vorliegend fokussierte Elektronenstrahlen 6, gleichzeitig auf dem Objekt 1 auftreffen und entlang der abzufahrenden Spur oder der abzufahrenden Fläche 16 auf der Objektoberfläche auftreffen. Durch den Einsatz einer Vielzahl von Elektronenstrahlen 6 ist es möglich, die Prozesszeiten zu verringern und sehr schnell die Entklebung durchzuführen.

Bei allen Verfahrarten ist es möglich, dass die Elektronenstrahlen analog oder digital über das Werkstück gefahren werden. Auch können unterschiedliche Klebbereiche gerastert abgefahren werden, um einzelne Bereiche, die aneinander angrenzen oder voneinander getrennt in der Klebschicht vorhanden sind, einzeln zu entkleben. In allen Varianten ist es vorgesehen und möglich, dass der Elektronenstrahl 6 beliebig innerhalb der abzufahrenden Spur oder der zu entklebenden Fläche 16 springen kann, um eine örtliche Erwärmung, die über das zur Zerstörung der Grenzschicht 31 notwendige Maß hinausgeht, zu vermeiden.

Mit dem erfindungsgemäßen Verfahren ist es insbesondere möglich, Klebschichten von Objekten zu trennen, die für eine Entklebung ursprünglich nicht vorgesehen und ausgelegt waren. So sind beispielsweise Motorsteuergeräte auch aus Sicherheitsaspekten in Klebtechnik ausgeführt, um eine ungewünscht Manipulation zu verhindern. Sollen die in dem Gehäuse eingekapselten elektronischen Bauteile zulässigerweise repariert werden, beispielsweise, weil einzelne Elektronikbauteile im Laufe der Zeit versagten, ist es notwendig, die Verbindung der Gehäuseteile 1, 2 möglichst schonend zu trennen, eine rein mechanische Trennung durch Fräsen oder Schleifen hätte einen hohen mechanischen Stress auf die Platine 4 zur Folge, insbesondere Wärmeleitverklebungen könnten auf diese Weise nicht entklebt werden. Ein ganzflächiges Erwärmen, beispielsweise mit einem Heißluftgebläse, würde eine zu hohe thermische Belastung auf die elektronischen Bauteile ausüben, so dass diese nach einem unvorhersagbaren Zeitraum ausfallen können, was ein erhebliches Sicherheitsrisiko darstellt.

Durch das erfindungsgemäße Verfahren ist es möglich, sämtliche Klebflächen zu entkleben, indem die Grenzschicht zwischen dem Substrat und dem Klebstoff zerstört wird. Es können duromere und thermoplastische Klebstoffe ebenso wie Leitklebstoffe entklebt werden. Die Temperaturbelastung sowohl auf die Platine als auch auf die Gehäuseteile sind aufgrund der fokussierten Temperatureinleitung über einen geringen Zeitraum sehr gering, so dass die verklebten Objekte in der Regel unbeschädigt bleiben und kein thermischer Stress auf die eingeschlossenen Objekte ausgeübt wird. Das Verfahren ist außerordentlich schnell und kann auch für verklebte Objekte angewendet werden, die konstruktiv nicht für eine Entklebung vorgesehen waren. Im Idealfall ist es möglich, von beiden Objekten die Klebschicht abzulösen, ohne dass das jeweilige Objekt thermisch beeinträchtigt wird, so dass nach dem Reinigen der Objekte, beispielsweise der Gehäuseteile 1, 2, diese erneut verwendet werden können. Da das Entklebverfahren einen hohen apparativen Aufwand zur Bereitstellung des Elektronenstrahls oder der Elektronenstahlen erfordert, können zur Sicherung sensibler elektronischer Bauteile mit noch wirksameren Klebstoffen verklebt werden, um ungewollte Manipulationen wirksamer vermeiden zu können.

## Patentansprüche

1. Verfahren zum Trennen zweier über zumindest eine Klebschicht (3) miteinander verklebter Objekte (1, 2), **dadurch gekennzeichnet, dass** zumindest ein Elektronenstrahl (6) auf der Oberfläche zumindest eines der Objekte (1) entlang der Klebschicht (3) geführt wird und die Verweildauer und die Leistung des Elektronenstrahls (6) dergestalt bemessen ist, dass die Grenzschicht (31) zwischen dem Klebstoff (3) und dem Objekt (1) durch über den auf der Oberfläche des Objekts (1) entlang geführten Elektronenstrahl (6) eingekoppelte Wärme (61) thermisch zerstört wird.

2. Verfahren nach Anspruch 1, **dadurch gekennzeichnet, dass** die Leistung und/oder Verweildauer des Elektronenstrahles (6) in Abhängigkeit von der Objektdicke und/oder der Art der Klebschicht (3) verändert wird.

3. Verfahren nach Anspruch 1 oder 2, **dadurch gekennzeichnet, dass** die Leistung und/oder Verweildauer des Elektronenstrahls (6) so bemessen wird, dass die Temperatur auf der der Elektronenstrahlquelle abgewandten Grenzschicht unterhalb der Zerstörungstemperatur der Grenzschicht liegt.

4. Verfahren nach einem der voranstehenden Ansprüche, **dadurch geleennzeichnet,** dass die Leistung und/oder Verweildauer des Elektronenstrahls (6) so bemessen wird, dass die Objekte (1, 2) unbeschädigt bleiben.

5. Verfahren nach einem der voranstehenden Ansprüche, **dadurch gekennzeichnet, dass** das Objekt (1, 2) auf einem Verfahrtisch eingespannt und unter dem Elektronenstrahl (6) entlangbewegt und/oder der Elektronenstrahl (6) über eine Ablenkspule abgelenkt wird.

6. Verfahren nach einem der voranstehenden Ansprüche, **dadurch gekennzeichnet, dass** der Elektronenstrahl (6) mit einer Beschleunigungsspannung unterhalb von 80kV betrieben wird.

7. Verfahren nach einem der voranstehenden Ansprüche, **dadurch gekennzeichnet, dass** die Verweildauer des Elektronenstrahls (6) zwischen 0,1 ms und 100 ms eingestellt wird.

8. Verfahren nach einem der voranstehenden Ansprüche, **dadurch gekennzeichnet, dass** die Objekte (1, 2) mittels eines Dichtklebstoffes (3) miteinander verklebt sind.

9. Verfahren nach einem der voranstehenden Ansprüche, **dadurch gekennzeichnet, dass** die Objekte (1, 2) als Gehäuseteile von Gehäusen für elektronische Komponenten ausgebildet sind.

10. Verfahren nach einem der voranstehenden Ansprüche, **dadurch gekennzeichnet, dass** die Objekte (1, 2) aus Metall ausgebildet sind.

11. Verfahren nach einem der voranstehenden Ansprüche, **dadurch gekennzeichnet, dass** beide Grenzschichten (31) gleichzeitig durch die Wärmeinbringung über Elektronenstrahlen (6) zerstört werden.

12. Verfahren nach einem der voranstehenden Ansprüche, **dadurch gekennzeichnet, dass** der Elektronenstrahl digital über die Objektoberfläche gerastert wird.

13. Verfahren nach einem der voranstehenden Ansprüche, **dadurch gekennzeichnet, dass** der Elektronenstrahl (6) über die Objektoberfläche gependelt wird.

14. Verfahren nach einem der voranstehenden Ansprüche, **dadurch gekennzeichnet, dass** mehrere Elektronenstrahlen (6) in Mehrstrahltechnik oder in Mehrbadtechnik über die Objektoberfläche geführt werden.

15. Verfahren nach einem der voranstehenden Ansprüche, **dadurch gekennzeichnet, dass** die Verweildauer und/oder Leistung des Elektronenstrahls (6) so bemessen wird, dass nur die Grenzschicht (31) zwischen dem Klebstoff und dem Objekt zerstört wird.

16. Verfahren nach einem der voranstehenden Ansprüche, **dadurch gekennzeichnet, dass** der Elektronenstrahl (6) punktweise auf zueinander beabstandete Bearbeitungsstellen verfahren wird.

17. Verfahren nach einem der voranstehenden Ansprüche, **dadurch gekennzeichnet, dass** es zum Trennen zweier über zumindest eine Klebschicht (3) miteinander verklebter Objekte (1, 2) eingesetzt wird, deren Klebverbindung beim Verkleben nicht für eine Trennung vorgesehen oder vorbereitet war.

## Claims

1. Method for separating two articles (1, 2) that are bonded to each other via at least one adhesive layer (3), **characterized in that** at least one electron beam (6) is guided along the adhesive layer (3) on the surface of at least one of the articles (1), and the residence time and the power of the electron beam (6) is/are dimensioned such that the boundary layer (31) between the adhesive (3) and the article (1) is destroyed thermally via the heat (61) injected via the electron beam (6) guided along on the surface of the article (1).

2. Method according to Claim 1, **characterized in that** the power and/or residence time of the electron beam (6) is/are varied as a function of the article thickness and/or the type of adhesive layer (3).

3. Method according to Claim 1 or 2, **characterized in that** the power and/or residence time of the electron beam (6) is/are dimensioned such that the temperature on the boundary layer facing away from the electron beam source lies below the destruction temperature of the boundary layer.

4. Method according to one of the preceding claims, **characterized in that** the power and/or residence time of the electron beam (6) is/are dimensioned such that the articles (1, 2) remain undamaged.

5. Method according to one of the preceding claims, **characterized in that** the article (1, 2) is clamped on a positioning table and is moved along under the electron beam (6) and/or the electron beam (6) is deflected via a deflection coil.

6. Method according to one of the preceding claims, **characterized in that** the electron beam (6) is operated with an acceleration voltage below 80 kV.

7. Method according to one of the preceding claims, **characterized in that** the residence time of the electron beam (6) is set between 0.1 ms and 100 ms.

8. Method according to one of the preceding claims, **characterized in that** the articles (1, 2) are bonded to each other by means of a sealing adhesive (3).

9. Method according to one of the preceding claims, **characterized in that** the articles (1, 2) are formed as housing parts of housings for electronic components.

10. Method according to one of the preceding claims, **characterized in that** the articles (1, 2) are formed of metal.

11. Method according to one of the preceding claims, **characterized in that** both boundary layers (31) are destroyed simultaneously as a result of the introduction of heat via electron beams (6).

12. Method according to one of the preceding claims, **characterized in that** the electron beam is swept digitally over the surface of the article.

13. Method according to one of the preceding claims, **characterized in that** the electron beam (6) is made to oscillate over the surface of the article.

14. Method according to one of the preceding claims, **characterized in that** a plurality of electron beams (6) are guided over the surface of the article in a multi-beam technique or in a multipool technique.

15. Method according to one of the preceding claims, **characterized in that** the residence time and/or power of the electron beam (6) is/are dimensioned such that only the boundary layer (31) between the adhesive and the article is destroyed.

16. Method according to one of the preceding claims, **characterized in that** the electron beam (6) is moved point by point to mutually spaced processing points.

17. Method according to one of the preceding claims, **characterized in that** it is used to separate two articles (1, 2) that are bonded to each other via at least one adhesive layer (3) and the adhesive connection of which, during bonding, was not provided or prepared for separation.

## Revendications

1. Procédé pour séparer deux objets (1, 2) collés l'un à l'autre via au moins une couche de colle (3), **caractérisé en ce que** l'on mène un faisceau d'électrons (6) sur la surface de l'un au moins des objets (1) le long de la couche de colle (3) et on choisit le temps de séjour et la puissance du faisceau d'électrons (6) de telle façon que la couche limite (31) entre la colle (3) et l'objet (1) est détruite thermiquement par la chaleur (61) du faisceau d'électrons (6) mené le long de la surface de l'objet (1).

2. Procédé selon la revendication 1, **caractérisé en ce que** la puissance et/ou le temps de séjour du faisceau d'électrons (6) est modifié(e) en fonction de l'épaisseur de l'objet et/ou du type de la couche de colle (3).

3. Procédé selon la revendication 1 ou 2, **caractérisé en ce que** la puissance et/ou le temps de séjour du faisceau d'électrons (6) est choisi(e) de telle façon que la température sur la couche limite détournée de la source du faisceau d'électrons se trouve au-dessous de la température de destruction de la couche limite.

4. Procédé selon l'une des revendications précédentes, **caractérisé en ce que** la puissance et/ou le temps de séjour du faisceau d'électrons (6) est choisi(e) de telle façon que les objets (1, 2) restent sans dommage.

5. Procédé selon l'une des revendications précédentes, **caractérisé en ce que** l'objet (1, 2) est serré sur une table mobile et est déplacé au-dessous du faisceau d'électrons (6), et/ou **en ce que** le faisceau d'électrons (6) est défléchi via une bobine déflectrice.

6. Procédé selon l'une des revendications précédentes, **caractérisé en ce que** le faisceau d'électrons (6) est amené à fonctionner avec une tension d'accélération au-dessous de 80 kV.

7. Procédé selon l'une des revendications précédentes, **caractérisé en ce que** le temps de séjour du faisceau d'électrons (6) est réglé entre 0,1 ms et 100 ms.

8. Procédé selon l'une des revendications précédentes, **caractérisé en ce que** les objets (1, 2) sont collés l'un à l'autre au moyen d'une colle étanche (3).

9. Procédé selon l'une des revendications précédentes, **caractérisé en ce que** les objets (1, 2) sont réalisés sous forme de parties de boîtier pour des composants électroniques.

10. Procédé selon l'une des revendications précédentes, **caractérisé en ce que** les objets (1, 2) sont réalisés en métal.

11. Procédé selon l'une des revendications précédentes, **caractérisé en ce que** les deux couches limite (31) sont détruites simultanément par l'apport de chaleur via des faisceaux d'électrons (6).

12. Procédé selon l'une des revendications précédentes, **caractérisé en ce que** le faisceau d'électrons est balayé de façon numérique sous forme d'une trame sur la surface de l'objet.

13. Procédé selon l'une des revendications précédentes, **caractérisé en ce que** le faisceau d'électrons (6) est balayé de façon pendulaire sur la surface de l'objet.

14. Procédé selon l'une des revendications précédentes, **caractérisé en ce que** plusieurs faisceaux d'électrons (6) sont menés sur la surface de l'objet suivant une technique à faisceaux multiples ou suivant une technique à bains multiples.

15. Procédé selon l'une des revendications précédentes, **caractérisé en ce que** le temps de séjour et/ou la puissance du faisceau d'électrons (6) est choisie de telle façon que seule la couche limite (31) entre la colle et l'objet est détruite.

16. Procédé selon l'une des revendications précédentes, **caractérisé en ce que** le faisceau d'électrons (6) est déplacé de façon ponctuelle vers des emplacements de travail à distance les uns des autres.

17. Procédé selon l'une des revendications précédentes, **caractérisé en ce qu'**il est employé pour séparer deux objets (1, 2) collés l'un à l'autre via au moins une couche de colle (3), dont la liaison collée n'était pas prévue ou préparée lors du collage en vue d'une séparation.
